# DEMANDE DE BREVET EUROPEEN

(11) **EP 0 744 877 A1**
(43) Date de publication de la demande: **27.11.1996**
(21) Numéro de dépôt: 96490024.5
(22) Date de dépôt: 23.05.1996
(51) Int. Cl.: H04Q 9/14

(54) **Procédé et dispositif de traitement numérique de mesures issues d'un ou plusieurs capteurs**

(30) Priorité: 24.05.1995 FR 9506409
(71) Demandeur: SARL : REGIPART, 59710 Avelin (FR)
(72) Inventeur: Hochart, Jean-Pierre, 59710 Avelin (FR)
(74) Mandataire: Duthoit, Michel

(57) **Abrégé**

La présente invention concerne un procédé et un dispositif de traitement numérique de mesures issues d'un ou plusieurs capteurs (1) dans lequel :
- on prévoit :
   - au moins un capteur (1) apte à relever des mesures sur l'état d'une installation, présentant au moins un protocole de communication numérique apte au moins à transmettre les mesures réalisées sous la forme de trames composées d'octets définissant des champs de nature donnée,
   - au moins une unité de traitement numérique (4),
- on paramètre la nature desdits champs, lors d'une phase d'initialisation, pour chacun des octets composant la ou les trames du protocole de communication, et, en phase d'exploitation :
- on décompose les trames émises par le capteur (1), octet par octet, en fonction du paramétrage défini lors de la phase d'initialisation, et on les recompose en vue de délivrer un message utilisable, à distance, par au moins une unité de contrôle (6) de l'installation.

## Description

La présente invention concerne un procédé et un dispositif de traitement numérique de mesures issues d'un ou plusieurs capteurs.

Elle trouvera, notamment, ses applications dans tous les domaines de l'activité économique dans lesquels on rencontre des installations de production industrielle, continues ou discontinues. Elle pourra être ainsi utilisée, par exemple, dans l'industrie chimique, agro-alimentaire, manufacturière, dans la production, le transport ou la distribution d'énergie, ou autres.

Depuis de longues années, dans l'ensemble de ces secteurs, de telles installations comportent, afin de pouvoir contrôler leur état, de nombreux capteurs. Actuellement, il est à noter que la tendance consiste à rendre ces capteurs de plus en plus "intelligents". En effet, grâce, notamment, à des capacités de traitement numérique et de calculs internes, ils intègrent de plus en plus de fonctionnalités.

Ainsi, pour beaucoup d'entre eux, la précision, l'unité et l'intervalle dans lesquels doivent s'effectuer les mesures sont paramétrables. Certains permettent également, par exemple, de réaliser des calculs tels que, notamment, des moyennes, des écarts types ou autres. Ils peuvent aussi présenter, entre autres, des offsets, ou même des possibilités de mémorisation interne des mesures effectuées.

De même, notamment pour les éléments relevant des informations de type logique, les mesures sont souvent regroupées sur des dispositifs tels que, par exemple, des automates qui constituent alors, comme précédemment, des capteurs "intelligents".

Par ailleurs, pour différentes raisons telles que, par exemple, la diminution des coûts ou les exigences des contraintes de sécurité, on souhaite généralement réduire le nombre d'opérateurs intervenant sur les sites de production industrielle.

Pour cela, il est nécessaire d'effectuer des regroupements du traitement des mesures relevées par les capteurs. On souhaite également, dans certains cas, pouvoir contrôler à distance lesdites mesures.

Pour ces différentes raisons, la plupart des capteurs que l'on rencontre désormais dans les installations de production industrielle sont aptes à émettre et recevoir des messages d'échanges d'informations. Compte tenu, comme évoqué plus haut, de la grande diversité des informations susceptibles d'être émises ou reçues par les capteurs, ces messages présentent une structure complexe.

Une des principales difficultés auquel est confronté l'homme du métier dans le contrôle de son installation industrielle réside donc dans le traitement desdits messages. En effet, chacun présente, d'une famille de capteur à l'autre, une structure particulière. Ainsi, les protocoles de communication utilisés par les capteurs sont fortement hétérogènes et ne peuvent pas être interprétés d'une manière unique.

Une première solution consiste dans le choix d'une seule famille de capteur, par exemple de la même origine. Tous les messages présentant alors la même structure, il est possible de les interpréter et de les utiliser.

Néanmoins, le matériel développé pour cela ne peut servir qu'avec ce seul type de capteur et ne peut pas être largement diffusé, son coût de mise au point est donc particulièrement élevé.

De plus, une même famille ne présente que très rarement tous les types de capteurs dont il est nécessaire de munir une installation pour pouvoir la contrôler. L'homme du métier est donc obligé soit de se passer d'informations, soit d'introduire un nouveau capteur, présentant un protocole de communication différant du premier. On se retrouve alors confronté au problème initial.

Une autre solution consiste en l'utilisation de procédé de traitement proposant, grâce à une base de données, une liste figée de protocoles de communication. On associe alors, au moment de la mise en route de l'installation, son protocole de communication à chacun des capteurs.

Si cette solution permet un choix de capteur plus grand, elle n'est néanmoins pas satisfaisante. En effet, la base de données ne propose qu'un nombre limité de protocoles de communication. On est donc de nouveau confronté aux problèmes précédemment évoqués, à savoir, notamment, soit l'obligation de se passer de certaines informations, soit l'introduction d'un capteur dont le protocole de communication n'est pas répertorié dans la base de données.

Le but de la présente invention est de proposer un procédé et un dispositif de traitement numérique de mesures issues d'un ou plusieurs capteurs qui pallient les inconvénients précités et permettent de délivrer, à distance, les mesures effectuées par lesdits capteurs quel que soit leur protocole de communication.

Un autre but de la présente invention est de proposer un procédé et un dispositif de traitement numérique de mesures issues d'un ou plusieurs capteurs qui permettent de délivrer, de manière homogène, les mesures effectuées par lesdits capteurs quel que soit leur protocole de communication.

Un autre but de la présente invention est de proposer un procédé et un dispositif de traitement numérique de mesures issues d'un ou plusieurs capteurs qui permettent de paramétrer, à distance, les caractéristiques de mesures desdits capteurs quel que soit leur protocole de communication.

Un autre but de la présente invention est de proposer un procédé et un dispositif de traitement numérique de mesures issues d'un ou plusieurs capteurs qui permettent de paramétrer, de manière homogène, les caractéristiques de mesures desdits capteurs quel que soit leur protocole de communication.

Un autre but de la présente invention est de proposer un procédé et un dispositif de traitement numérique de mesures issues d'un ou plusieurs capteurs qui permettent de regrouper la lecture des mesures effectuées par lesdits capteurs et/ou leur paramétrage sur un support unique.

Un autre but de la présente invention est de proposer un procédé et un dispositif de traitement numérique de mesures issues d'un ou plusieurs capteurs qui permettent d'effectuer un contrôle d'une installation quel que soit le type de support utilisé.

Un autre but de la présente invention est de proposer un procédé et un dispositif de traitement numérique de mesures issues d'un ou plusieurs capteurs qui soient simples à mettre en oeuvre et à exploiter.

D'autres buts et avantages de la présente invention apparaîtront au cours de la description qui va suivre qui n'est donnée qu'à titre indicatif et qui n'a pas pour but de la limiter.

La présente invention concerne un procédé de traitement numérique de mesures issues d'un ou plusieurs capteurs dans lequel :
- on prévoit :
   - au moins un capteur, apte à relever des mesures sur l'état d'une installation, présentant au moins un protocole de communication numérique apte au moins à transmettre les mesures réalisées sous la forme de trames composées d'octets définissant des champs de nature donnée,
   - au moins une unité de traitement numérique,
- on paramètre la nature desdits champs, lors d'une phase d'initialisation, pour chacun des octets composant la ou les trames du protocole de communication et,
en phase d'exploitation :
- on décompose les trames émises par le capteur, octet par octet, en fonction du paramétrage défini lors de la phase d'initialisation, et on les recompose en vue de délivrer un message utilisable, à distance, par au moins une unité de contrôle de l'installation.

La présente invention concerne également un dispositif conçu pour la mise en oeuvre du procédé, évoqué ci-dessus, de traitement numérique de mesures issues d'un ou plusieurs capteurs dans lequel on prévoit :
- au moins un capteur apte à relever des mesures sur l'état d'une installation, présentant un protocole de communication numérique apte au moins à transmettre les mesures réalisées sous la forme de trames composées d'octets définissant des champs ce nature donnée,
- au moins une unité de traitement numérique,
ladite unité de traitement numérique comportant:
- des moyens pour paramétrer la nature desdits champs pour chacun des octets composant la ou les trames du protocole de communication,
- des moyens pour décomposer les trames émises par le capteur, octet par octet, en fonction du paramétrage défini, et pour les recomposer en vue de délivrer un message utilisable, à distance, par au moins une unité de contrôle de l'installation.

La présente invention sera mieux comprise à la lecture de la description suivante accompagnée des dessins en annexe qui en font partie intégrante.

La figure 1 décrit, de manière schématique, un exemple d'ensemble de capteurs, contrôlant l'état d'une installation, pour lesquels un procédé de traitement numérique conforme à l'invention peut être mis en oeuvre.

La figure 2 décrit, sous la forme d'un schéma d'étape, un exemple de mise en oeuvre du procédé de traitement numérique conforme à l'invention.

La figure 3 illustre, de manière schématique des exemples de structures de trames de protocole de communication utilisées par les capteurs représentés à la figure 1.

La figure 4 détaille un exemple de suite d'octets composant des trames d'un des protocoles représenté à la figure 2 échangées grâce à un procédé de traitement numérique conforme à l'invention.

La figure 5 décrit, sous la forme d'un organigramme, un détail d'une étape d'un procédé de traitement numérique conforme à l'invention.

La présente invention concerne un procédé de traitement numérique de mesures issues d'un ou plusieurs capteurs.

Elle trouvera, notamment, ses applications, dans tous les domaines de l'activité économique dans lesquels on rencontre des installations de production industrielle, continue ou discontinue. Elle pourra ainsi être utilisée, par exemple, dans l'industrie chimique, agro-alimentaire, manufacturière, ainsi que, notamment, dans la production, le transport ou la distribution d'énergie.

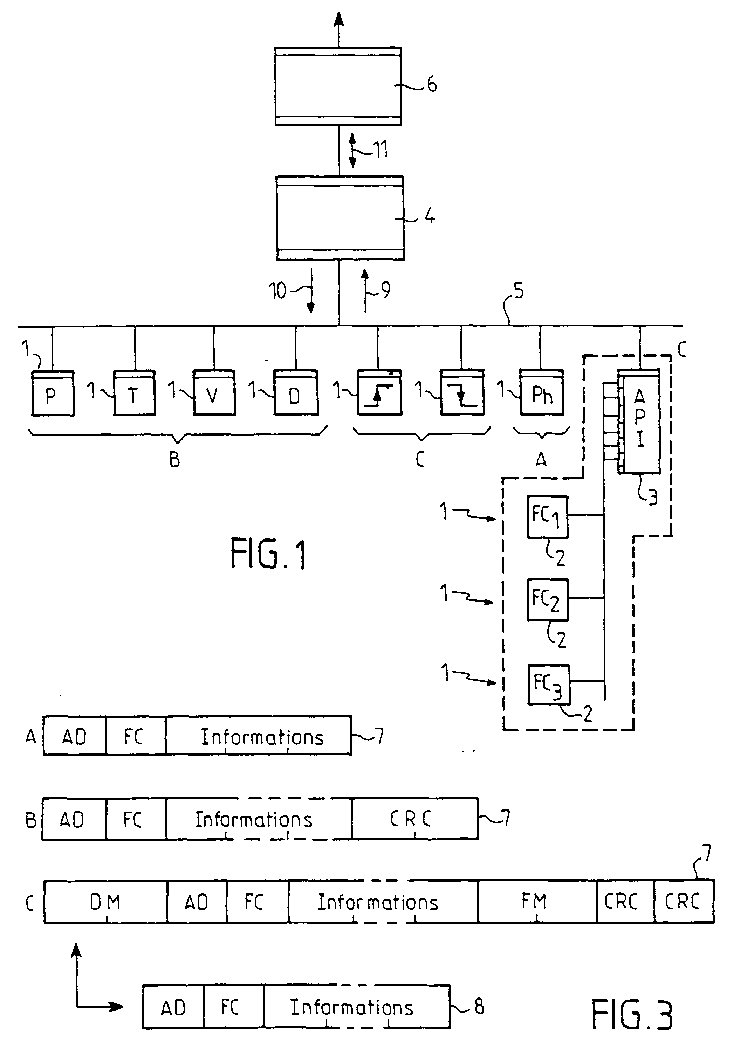

Comme représenté à la figure 1, le procédé, objet de la présente demande, porte sur le traitement numérique de mesures issues d'un ou plusieurs capteurs 1. Ainsi, selon l'invention, on prévoit au moins un capteur 1, apte à relever des mesures sur l'état d'une installation, notamment installation de production industrielle, afin, par exemple, de pouvoir contrôler son état.

Il pourra s'agir aussi bien de capteurs, comme ceux des familles A et B, permettant de relever des mesures de type analogique telles que notamment des pressions, des températures, des volumes, des débits, des concentrations ou autres que de capteurs, comme ceux de la famille C, permettant de relever des mesures de type logique telles que notamment, des dépassements de seuils, des fins de course ou autres.

Afin de pouvoir fournir des informations les plus efficaces et les plus complètes possibles sur l'installation dont ils suivent l'état, le ou les capteurs 1 présentent, éventuellement, des capacités de traitement numérique et de calcul interne. Ainsi, à titre d'exemple, leur précision, leur unité et/ou leur intervalle de mesure sont variables. De plus, ils peuvent éventuellement permettre, notamment, de fournir des résultats de calcul sur les mesures effectuées tels que des moyennes, des écarts types ou autres. Ils peuvent aussi présenter, entre autres des possibilités d'offset ou de mémorisation interne des mesures effectuées.

Afin de pouvoir délivrer à l'extérieur l'ensemble de ces informations, le ou les capteurs 1 présentent au moins un protocole de communication numérique apte au moins à transmettre les mesures réalisées sous la forme de trames composées d'octets définissant des champs de nature donnée.

A ce sujet, il est d'ailleurs à noter que la présente invention porte également sur des capteurs 2 ne présentant pas de protocole de communication numérique. Pour cela, ils sont connectés, par exemple point à point, à des moyens de traitement numérique 3 tels que, notamment, des automates programmables industriels.

Ces derniers, présentant au moins un protocole de communication numérique apte au moins à transmettre les mesures réalisées sous la forme de trames composées d'octets définissant des champs de nature donnée, forment en association avec un capteur 2 un capteur du même type que les capteurs 1 tels que définis plus haut.

Selon le procédé conforme à l'invention, on prévoit également au moins une unité de traitement numérique 4. Elle est reliée aux capteurs 1, par exemple, soit point à point, soit, comme illustré, par un réseau de communication numérique 5. La connexion entre le ou les capteurs 1 peut d'ailleurs être, soit directe, soit indirecte, des instruments intermédiaires de traitement numérique, non représentés, tels que, notamment des automates, des concentrations des routeurs ou autres, pouvant être prévus.

Selon l'invention, lors d'une première phase d'initialisation, on paramètre, pour chacun des octets composant la ou les trames du protocole de communication du ou des capteurs 1, la nature du champ correspondant.

Puis, en phase d'exploitation, on décompose les trames émises par le ou les capteurs 1, octet par octet, en fonction du paramétrage défini lors de la phase d'initialisation, et on les recompose.

On obtient ainsi un message utilisable, à distance, par au moins une unité de contrôle 6 de l'installation.

En ce qui concerne ces derniers, il peut s'agir, par exemple, aussi bien d'automates que de micro-ordinateurs de type classique permettant de visualiser et/ou d'agir en retour sur les mesures relevées.

Le procédé de traitement numérique conforme à l'invention permet donc, dans un premier temps, d'effectuer un contrôle à distance de l'installation pour laquelle il est mis en oeuvre. Il permet également, selon un exemple de mise en oeuvre, de traiter des mesures issues de capteurs de familles différentes.

En effet, selon ce mode de réalisation, on prévoit au moins deux capteurs 1 aptes à relever des mesures sur l'état d'une installation présentant des protocoles de communication numérique, hétérogènes aptes au moins à transmettre les mesures réalisées sous la forme de trames composées d'octets définissant des champs de nature donnée. On prévoit également au moins ladite unité de traitement numérique 4.

Dans la phase d'initialisation, on paramètre, capteur par capteur, la nature des champs pour chacun des octets composant la ou les trames des protocoles de communication.

Puis, en phase d'exploitation, on décompose les trames émises par chacun des capteurs, octet par octet, en fonction du paramétrage défini lors de la phase d'initialisation, et on les recompose de manière homogène.

On obtient ainsi, alors que les capteurs 1 ont des protocoles de communication numérique hétérogènes, un message, de structure définie et unique, utilisable par au moins ladite unité de contrôle 6 de l'installation.

Selon les différents modes de mise en oeuvre du procédé conforme à l'invention, les capteurs 1 émettent leurs messages d'informations, soit de leur propre initiative, soit en réponse à une question de l'unité de traitement 4.

Selon ce dernier mode, le ou les protocoles de communication numérique du ou des capteurs 1 sont aptes également à transmettre des questions, émises par l'unité de traitement 4 vers les capteurs 1, sous la forme de trames composées d'octets définissant des champs de nature donnée.

Comme précédemment, afin que les capteurs 1 puissent interpréter les messages qui leur sont envoyés, on paramètre, lors de la phase d'initialisation, la nature desdits champs, capteur par capteur, pour chacun des octets composant la ou les trames des protocoles de communication.

Puis, en phase d'exploitation, on prévoit des messages d'interrogation du ou des capteurs 1, comprenant au moins certains champs de leur protocole, on décompose lesdits messages, on recompose octet par octet les trames correspondantes en fonction du paramétrage défini lors de la phase d'initialisation et on émet chaque trame vers le capteur 1 concerné.

Les messages d'interrogation sont émis, par exemple, à distance et/ou de manière homogène, par l'unité de contrôle 6 qui les transmet à l'unité de traitement numérique 4 qui, après décomposition et recomposition, les transmet aux capteurs 1 selon une trame dont la structure correspond, pour chacun, malgré leur éventuelle hétérogénéité, à celle de leur protocole de communication.

Selon un exemple de mise en oeuvre du procédé de traitement numérique conforme à l'invention, afin de pouvoir définir, à distance et/ou de manière homogène, les informations évoquées plus haut telles que, notamment, son calibrage, au moins un des capteurs 1 présente un protocole de communication apte également à permettre le paramétrage de ses caractéristiques.

Selon ce mode de réalisation, on émet, par exemple, préalablement à l'acquisition des mesures, notamment, un message de paramétrage comprenant au moins certains champs du protocole de communication de ce capteur 1, on décompose ledit message, on recompose, octet par octet la trame correspondante en fonction de son protocole de comunication, telle que définie lors de la phase d'initialisation, et on émet la trame vers ledit capteur 1. On obtient ainsi un paramétrage de ces caractéristiques de mesures.

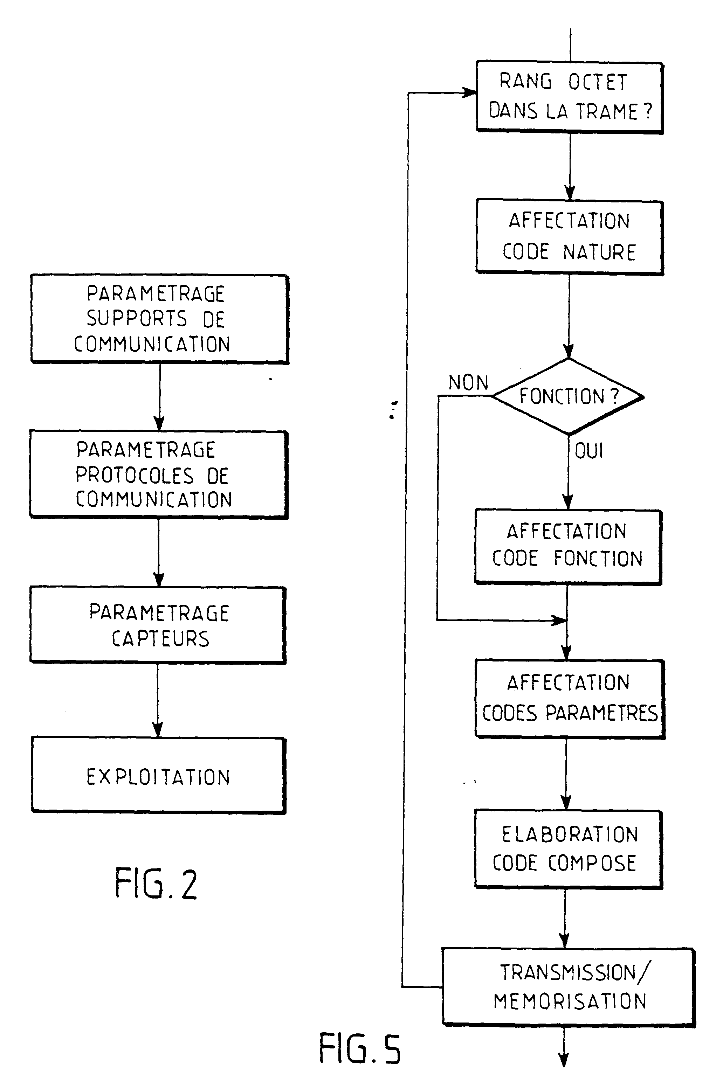

Un exemple particulier de mise en oeuvre d'un procédé de traitement numérique conforme à l'invention est illustré à la figure 2.

Ainsi, dans une première étape, on paramètre les caractéristiques du ou des supports de communication 5. Il s'agit, notamment, des numéros d'abonné des capteurs 1, de leur vitesse de communication, de leur parité, de la nature de leurs bits de stop, de la présence de signaux de fin ou de début d'émission, ou autres.

On paramètre ensuite, pour chaque capteur 1, la structure de la trame de son protocole de communication.

Une fois cette première phase de définition des caractéristiques de la communication entre les capteurs 1 et l'unité de traitement 4 achevée, on paramètre, éventuellement, les caractéristiques de mesures des capteurs 1. Pour cela, on émet, selon le paramétrage défini lors de la phase- de définition de la structure des protocoles de communication, des messages permettant de mettre à jour les données définies dans les capteurs 1.

L'ensemble de ces paramètres étant défini selon les choix de l'opérateur, on passe ensuite, par exemple, en phase d'exploitation. Grâce à la décomposition et recomposition des trames des protocoles de communication des capteurs 1, effectuées selon le paramétrage défini lors de la phase d'initialisation, ces derniers peuvent transmettre, malgré leur éventuelle hétérogénéité, à distance et/ou de manière homogène, les mesures qu'ils ont effectuées.

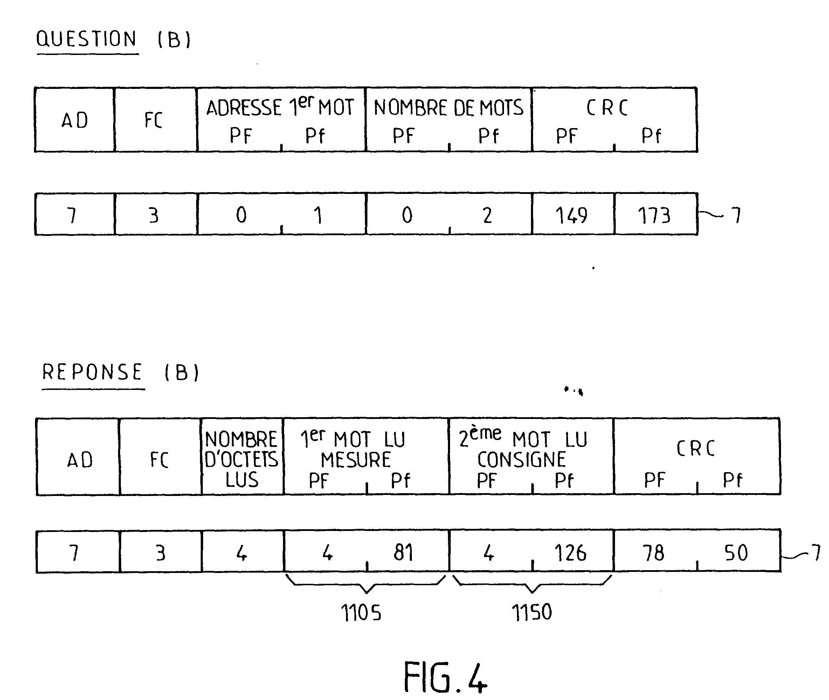

Comme représentées à la figure 3, les trames, repérées 7, émises par ou vers le ou les capteurs 1 comprennent, par exemple, au moins un champ AD définissant l'adresse du capteur 1 concerné, un champ FC définisant la fonction de la trame et un champ comportant des informations sur les mesures et/ou paramétrages échangés.

Ainsi, à titre d'exemple, selon le procédé de traitement numérique conforme à l'invention, on prévoit, notamment, au moins un capteur 1 présentant un protocole de communication A dont la trame comprend, au moins :
- un premier octet représentant l'adresse du capteur 1,
- un deuxième octet représentant la fonction de la trame,
- des troisième, quatrième et cinquième octet représentant les mesures et/ou paramétrages échangés.

On prévoit aussi, éventuellement, au moins un catpeur 1 présentant un protocole de communication B dont la trame comprend :
- un premier octet représentant l'adresse du capteur,
- un second octet représentant la fonction de la trame,
- un nombre donné d'octets suivants représentant les mesures et/ou paramétrages échangés,
- un avant dernier et dernier octet, appelé CRC, représentant un test de bonne transmission de la trame.

On prévoit également, notamment, au moins un capteur 1 présentant un protocole de communication C dont la trame comprend :
- un premier et un deuxième octets représentant un signal DM de début d'émission d'un message,
- un troisième octet représentant l'adresse du capteur concerné par le message,
- un quatrième octet représentant la fonction de la trame,
- un nombre donné d'octets suivant représentant les mesures ou paramétrages échangés,
- deux octets suivant représentant un signal FM de fin d'émission du message,
- un octet représentant un test de bonne transmission de la trame,
- un dernier octet répétant le contenu du précédent.

Selon l'invention, l'unité de traitement 4 permet, en fonction du paramétrage, établi lors de la phase d'initialisation, définissant la nature de chacun des octets des trames de protocole de communication, d'une part, de décomposer et recomposer, de manière homogène, par exemple sous la forme d'un message 8, les trames A, B, C émises par les capteurs 1 et, d'autre part à partir d'un message 8, décomposé et recomposé, d'émettre des trames vers les capteurs 1 en utilisant pour chacun leur protocole de communication. Ces différentes transmissions sont illustrées à la figure 1 respectivement par les flèches repérées 9 et 10.

Les messages 8 sont échangés, par exemple comme illustrés par la flèche repérée 11 entre l'unité de traitement 4 et l'unité de contrôle 6. Ils comprennent, notamment, comme représentés à la figure 2 un premier octet définissant l'adresse du capteur 1 concernée par le message, un deuxième octet définissant la fonction du message et un nombre donné d'octets suivant comprenant les informations sur les mesures et/ou paramétrages échangés avec le capteur 1.

Ces messages 8 permettent, par exemple, grâce à des échanges dynamiques de données entre l'unité de traitement numérique 4 et l'unité de contrôle 6 de questionner les capteurs 1 ou d'afficher leurs mesures, notamment, par l'intermédiaire d'un logiciel de type tableur.

Le contrôle de l'installation peut ainsi être centralisé, par exemple, sur un support unique et ceci quel que soit son protocole de communication. En effet, la structure du message 8 peut être définie selon la volonté de l'opérateur. Elle est donc adaptable à tout type d'unité de contrôle 6.

A ce sujet, il est à noter que la structure des trames des protocoles de communication des capteurs 1 et/ou la structure des messages 8 sont, le plus souvent, donnés par les constructeurs de matériel concerné. Quand cela n'est pas le cas, des outils connus de l'homme de l'art, sous le nom d'analyseurs de trames, peuvent être utilisés afin de déterminer la nature des différents octets rencontrés.

La structure des trames des protocoles de communication des capteurs 1 peut donc être décrite, lors de la phase d'initialisation, par un opérateur qui, selon l'invention, indique capteur par capteur, octet par octet la nature de chacun de ces derniers.

A titre d'exemple, les fonctions des trames des protocoles de communication des capteurs 1 sont, en ce qui concerne la mesure, notamment la lecture d'une information tout ou rien et/ou la lecture d'un mot et/ou la lecture d'un nombre donné d'informations tout ou rien et/ou la lecture d'un nombre donné de mots. En ce qui concerne le paramétrage, leurs fonctions sont, notamment, l'écriture d'une information tout ou rien et/ou l'écriture d'un mot et/ou l'écriture d'un nombre donné d'informations tout ou rien et/ou l'écriture d'un nombre donné de mots.

Les informations tout ou rien sont constituées, par exemple, par un bit d'un octet. Quand aux mots, ils sont constitués, par exemple, par un ou deux octets. Dans ce dernier cas, l'un des octets est de poids faible et l'autre de poids fort.

Il est à noter que le nombre et la nature des octets des champs comprenant les informations sur les mesures et/ou paramétrages échangés dépendent de la fonction de la trame et/ou de la nature de l'émetteur. Ainsi, les trames émises par l'unité de traitement 4 vers les capteurs 1, dites trames de questions, ayant pour fonction la lecture d'informations sur les mesures et/ou paramétrages effectués par un capteur 1 comprennent, en ce qui concerne le champ d'informations, notamment, un ou deux octets désignant l'adresse, dans le capteur 1 concerné, de l'information ou de la première des informations tout ou rien et/ou du mot ou du premier des mots à lire et/ou un ou deux octets pour désigner leur nombre.

Les trames correspondantes émises des capteurs 1 vers l'unité de traitement 4, dite trame de réponse, comprennent, en ce qui concerne leur champ d'information, notamment, un octet pour désigner le nombre d'octets lus et/ou un ou deux octets pour chacune des valeurs lues.

En cas de paramétrage des capteurs 1, la fonction écriture est utilisée. Les trames de question comprennent alors, en ce qui concerne leur champ d'information, notamment, un ou deux octets pour désigner, dans le capteur 1 concerné, l'adresse de l'information ou de la première des informations tout ou rien et/ou du mot ou du premier des mots à paramétrer ainsi qu'un ou deux octets pour chacune des valeurs de paramétrage. Les trames de réponse reprennent alors, par exemple, en ce qui concerne le champ d'information, notamment, un octet définissant le nombre d'octets modifiés ainsi qu'un ou deux octets pour chacune des valeurs paramétrées.

Chacun des cas évoqués ci-dessus est défini pendant le paramétrage lors de la phase d'initialisation. La décomposition et recomposition des trames correspondantes, pendant la phase d'exploitation, est également réalisée suivant la nature desdites fonctions et l'origine desdites trames.

La figure 4 illustre un exemple particulier de trames de question et de trames de réponse échangées à partir d'un capteur 1 présentant un protocole de communication B. Plus précisément, l'objet de l'échange d'informations est de connaître la mesure relevée par le capteur situé à l'adresse n° 7, à savoir le capteur de température T, ainsi que de rappeler, pour mémoire, la consigne de température appliquée à l'installation suivie.

Ces deux valeurs étant disponibles à l'adresse n° 1 et n° 2 dudit capteur, la trame de question se compose d'une suite d'octets permettant la lecture des deux premiers mots contenus dans le capteur prévu à l'adresse n° 7. La trame se termine par deux octets constituant la valeur du test de bonne transmission. Selon l'exemple particulier représenté, il s'agit du test, connu de l'homme de l'art, sous le nom de CRC 16.

En réponse à cette question, le capteur T émet une réponse dans laquelle il rappelle son numéro d'adresse, la fonction demandée puis indique le nombre d'octets lus et, réparties deux par deux dans les quatre octets suivants, la valeur de la mesure relevée et la valeur de la consigne correspondante. Dans ces paires d'octets, le premier octet représente celui de poids fort et le second celui de poids faible. Ici aussi le message se termine par deux octets présentant les résultats du test de bonne transmission.

Naturellement, bien que non représentés, les octets se présentent sous la forme d'une décomposition binaire constituée d'une suite de zéro ou de un.

On détaille dans la suite un exemple, illustré à la figure 5, de mise en oeuvre du traitement des trames des protocoles de communication du ou des capteurs 1 selon le procédé conforme à l'invention. Pour chaque octet d'une trame, on affecte tout d'abord, notamment, un code définissant sa nature. On détecte ainsi, par exemple, s'il s'agit d'un octet DM de début de trame, FM de fin de trame, AD d'adresse du capteur, FC de fonctions, de CRC, d'adresse d'informations dans le capteur, de redondance, de nombre de mots suivants, de valeurs ou autres.

S'il s'agit d'un octet de fonction, on affecte alors, pour chaque fonction, la structure, évoquée plus haut, du champ d'informations correspondant.

On affecte également à l'octet, notamment, ses différents paramètres, à savoir, par exemple, ses différentes valeurs significatives, sa longueur en bit, l'éventuelle nécessité de prendre en compte l'octet suivant, son poids ou autre.

Enfin, avant de passer au traitement de l'octet suivant, on élabore un code composé reprenant l'ensemble des informations de nature, de fonction et de paramètre précédemment défini. Ces informations sont alors transmises et/ou mémorisées.

En ce qui concerne l'étape initiale, selon un premier mode de réalisation, on paramètre, capteur par capteur, la structure des trames émises vers le ou les capteurs 1, on définit la structure des trames émises par le ou les capteurs 1, on définit une question, on interroge le capteur concerné, on observe la réponse et on vérifie la validité du paramétrage.

Selon un autre exemple de réalisation, on paramètre, capteur par capteur, la structure des trames émises vers le ou les capteurs 1, on définit une question, on interroge le capteur concerné, on observe la réponse et on construit la structure des trames émises par les capteurs.

Selon ce dernier mode, le paramétrage de la structure des trames de réponse se fait donc a posteriori, ce qui permet de prendre en compte toutes les éventuelles particularités d'un protocole de communications données.

Lors de l'exploitation, selon un exemple de mise en oeuvre du procédé conforme à l'invention, on émet une trame de questions vers un capteur 1, on attend la trame émise en réponse par le capteur et on interroge le capteur suivant. Le traitement numérique des mesures est ainsi effectué, notamment, selon le mode connu de l'homme du métier sous le nom de Maître Esclave. Les échanges entre les capteurs 1 et l'unité de traitement 4 sont, par exemple, asynchrones.

La décomposition et recomposition des trames selon le paramétrage défini lors de la phase d'initialisation est menée, selon les capacités de l'unité de traitement 4, soit parallèlement aux échanges de messages avec les capteurs 1, soit capteur 1 par capteur 1. Il en est de même des échanges entre l'unité de traitement 4 et l'unité de contrôle 6 de l'installation.

Les éventuelles erreurs de transmission sont détectées, éventuellement, notamment, par exploitation des champs CRC et/ou par contrôle de la taille des trames émises et/ou reçues.

La présente invention concerne également un dispositif conçu pour la mise en oeuvre du procédé, évoqué plus haut, de traitement numérique de mesures issues d'un ou plusieurs capteurs 1 dans lequel on prévoit au moins un capteur 1, apte à relever des mesures sur l'état d'une installation, présentant un protocole de communication numérique apte au moins à transmettre les mesures réalisées sous la forme de trames composées d'octets définissant des champs de nature donnée, ainsi qu'au moins une unité de traitement numérique 4.

Selon l'invention, ladite unité de traitement numérique 4 comporte au moins des moyens pour paramétrer la nature desdits champs pour chacun des octets composant la ou les trames du protocole de communications du ou des capteurs 1. Elle comprend également des moyens pour décomposer les trames émises par le ou les capteurs 1, octet par octet, en fonction du paramétrage défini, et pour les recomposer en vue de délivrer un message utilisable, à distance, par au moins une unité de contrôle 6 de l'installation.

Il est à noter que, selon un mode particulier de réalisation, l'unité de traitement numérique 4 et donc les moyens pour paramétrer et les moyens pour décomposer et recomposer peuvent être décentralisés au niveau de chacun des capteurs 1.

Selon un autre mode de réalisation, l'unité de traitement numérique 4 et l'unité de contrôle de l'installation 6 sont prévus sur un même support.

Comme évoqué plus haut, les liaisons entre l'unité de traitement 4 et les capteurs 1 sont réalisées, par exemple, soit point à point, soit grâce à un réseau de communications 5. Ce dernier peut être constitué, notamment, d'un support physique connu de l'homme du métier sous le nom de liaison RS 232, RS 422, boucle de courant ou autre.

Selon les différents modes de réalisation du dispositif conforme à l'invention, les moyens pour paramétrer, décomposer et recomposer permettent aussi, notamment, de délivrer un message homogène utilisable par l'unité de contrôle 6 de l'installation même si cette dernière comprend au moins deux capteurs présentant des protocoles de communications numériques de nature hétérogène.

Ils permettent aussi, si les protocoles de communications du ou des capteurs 1 sont adaptés à une telle utilisation, par exemple, d'émettre des trames de questions, et notamment de paramétrage, vers le ou les capteurs 1.

Naturellement, d'autres mises en oeuvre de la présente invention, à la portée de l'homme de l'art, auraient pu être envisagées sans pour autant sortir du cadre de la présente demande.

## Revendications

1. Procédé de traitement numérique de mesures issues d'un ou plusieurs capteurs (1) dans lequel :
- on prévoit :
- au moins un capteur (1), apte à relever des mesures sur l'état d'une installation, présentant au moins un protocole de communication numérique apte au moins à transmettre les mesures réalisées sous la forme de trames composées d'octets définissant des champs de nature donnée,
- au moins une unité de traitement numérique (4),
- on paramètre la nature desdits champs, lors d'une phase d'initialisation, pour chacun des octets composant la ou les trames des protocoles de communication, et, en phase d'exploitation :
- on décompose les trames émises par le capteur (1), octet par octet, en fonction du paramétrage défini lors de la phase d'initialisation, et on les recompose en vue de délivrer un message utilisable, à distance, par au moins une unité de contrôle (6) de l'installation.

2. Procédé de traitement numérique selon la revendication 1 dans lequel :
- on prévoit :
- un capteur (1), présentant des protocoles de communication numérique, hétérogènes,
- au moins ladite unité de traitement numérique (4),
- on paramètre la nature desdits champs, lors de la phase d'initialisation, capteur par capteur, pour chacun des octets composant la ou les trames des protocoles de communication,
et, en phase d'exploitation :
- on décompose les trames émises par chacun des capteurs, octet par octet, en fonction du paramétrage défini lors de la phase d'initialisation, et on les recompose de manière homogène en vue de délivrer un message utilisable par au moins ladite unité de contrôle (6) de l'installation.

3. Procédé de traitement numérique selon la revendication 1, caractérisé par le fait que :
- le ou les protocoles de communication numérique du ou des capteurs (1) sont aptes également à transmettre des questions, émises par l'unité de traitement (4) vers le ou lesdits capteurs (1), sous la forme de trames composées d'octets définissant des champs de nature donnée,
- on paramètre la nature desdits champs, lors de la phase d'initialisation, capteur (1) par capteur (1), pour chacun des octets composant la ou les trames des protocoles de communication,
et, en phase d'exploitation :
- on prévoit des messages d'interrogation du ou des capteurs (1), comprenant au moins certains champs de leur protocole, on décompose lesdits messages, on recompose octet par octet, les trames correspondantes en fonction du paramétrage défini lors de la phase d'initialisation, et on émet chaque trame vers le capteur (1) concerné.

4. Procédé de traitement numérique selon la revendication 3, dans lequel au moins un des capteurs (1) présente un protocole de communication apte également à permettre le paramétrage de caractéristiques dudit capteur et dans lequel on émet, préalablement à l'acquisition des mesures, un message de paramétrage, comprenant au moins certains champs dudit protocole de communication, on décompose le message, on recompose, octet par octet, la trame correspondante en fonction du protocole de communication dudit capteur (1), défini lors de la phase d'initialisation, et on émet la trame vers ledit capteur (1) en vue de paramétrer ses caractéristiques de mesure.

5. Procédé de traitement numérique selon la revendication 3, caractérisé par le fait que les trames émises par ou vers le ou les capteurs comprennent, au moins, un champ définissant l'adresse du ou des capteurs (1), un champ définissant la fonction de la trame et un champ comportant des informations sur les mesures et/ou paramétrages échangés.

6. Procédé de traitement numérique selon la revendication 5, caractérisé par le fait que les fonctions des trames sont, pour la mesure, la lecture d'une information tout ou rien et/ou la lecture d'un mot et/ou la lecture d'un nombre donné d'informations tout ou rien et/ou la lecture d'un nombre donné de mots et/ou, pour le paramétrage, l'écriture d'une information tout ou rien et/ou l'écriture d'un mot et/ou l'écriture d'un nombre donné d'informations tout ou rien et/ou l'écriture d'un nombre donné de mots.

7. Procédé de traitement numérique selon la revendication 3, caractérisé par le fait que, lors de l'étape initiale, on paramètre, capteur par capteur, la structure des trames émises vers le ou les capteurs (1), dites trames de question, on définit la structure des trames émises par le ou les capteurs (1), dites trames de réponse, on définit une question, on interroge le capteur concerné, on observe la réponse et on vérifie la validité du paramétrage.

8. Procédé de traitement numérique selon la revendication 3, caractérisé par le fait que, lors de l'étape initiale, on paramètre, capteur par capteur, la structure des trames émises vers le ou les capteurs (1), dites trames de question, on définit une question, on interroge le capteur concerné, on observe la réponse et on construit la structure des trames émisse par le ou les capteurs (1), dites trames de réponse.

9. Procédé de traitement numérique selon la revendication 3, caractérisé par le fait que l'on émet une trame de question vers un capteur (1), on attend la trame émise en réponse par ledit capteur (1) et on interroge le capteur suivant.

10. Dispositif conçu pour la mise en oeuvre du procédé, selon la revendication 1, de traitement numérique de mesure issu d'un ou plusieurs capteurs (1) dans lequel on prévoit :
- au moins un capteur (1), apte à relever des mesures sur l'état d'une installation, présentant un protocole de communication numérique apte au moins à transmettre les mesures réalisées sous la forme de trame composée d'octets définissant des champs de nature donnée,
- au moins une unité de traitement numérique (4),
ladite unité de traitement numérique (4) comportant au moins :
- des moyens pour paramétrer la nature desdits champs pour chacun des octets composant la ou les trames du protocole de communication,
- des moyens pour décomposer les trames émises par le capteur (1), octet par octet, en fonction du paramétrage défini, et pour les recomposer en vue de délivrer un message utilisable à distance par au moins une unité de contrôle (6) de l'installation.
